# EUROPÄISCHE PATENTSCHRIFT

(11) **EP 2 452 166 B1**
(45) Veröffentlichungstag und Bekanntmachung des Hinweises auf die Patenterteilung: **14.09.2016**
(21) Anmeldenummer: 10730099.8
(22) Anmeldetag: 07.07.2010
(51) Int. Cl.: G01F 1/80, G01F 1/84

(54) **MASSENDURCHFLUSSMESSUNG UND -MESSVORRICHTUNG MIT ZENTRALER SCHÜTTGUTZUFUHR**
MASS FLOW RATE MEASUREMENT AND MEASURING DEVICE HAVING A CENTRAL BULK GOODS FEED
MESURE DU DÉBIT MASSIQUE ET DISPOSITIF DE MESURE DU DÉBIT MASSIQUE AVEC APPORT CENTRALISÉ DE MATIÈRE EN VRAC

(30) Priorität: 07.07.2009 DE 102009032145
(43) Veröffentlichungstag der Anmeldung: 16.05.2012
(73) Patentinhaber: Schenck Process GmbH, 64293 Darmstadt (DE)
(72) Erfinder: KAHLE, Jens, 63303 Dreieich (DE)
(86) Internationale Anmeldenummer: PCT/EP2010/004088
(87) Internationale Veröffentlichungsnummer: WO 2011/003582

(56) Entgegenhaltungen:
- EP-A1- 0 845 662
- EP-A1- 0 864 850
- DE-A1-102004 060 045
- US-A- 2 934 951

## Beschreibung

Die vorliegende Erfindung betrifft eine Vorrichtung zum Messen eines Massestromes von fließfähigen Schüttgütern, nach dem Coriolis- Messprinzip.

Zum kontinuierlichen Erfassen, Dosieren und Regeln großer Mengen an fließfähigen Schüttgütern sind Messgeräte bekannt, mit denen ein jeweiliger, durchfließender Massestrom unter Ausnutzung der Corioliskraft gemessen werden kann. Ein derartiges Messgerät wird im Folgenden als Coriolismessgerät bezeichnet welches dem Fachmann z.B. auch unter den Namen Coriolis-Durchflusswaage oder Corioliswaage bekannt ist. Coriolismessgeräte bestehen im Wesentlichen aus einem Gehäuse, das ein Einlaufrohr, einen Auslauftrichter sowie ein um eine vertikale Drehachse drehbares Flügelrad umfasst. Das Flügelrad verfügt über eine Antriebswelle, die bevorzugt zentral durch die obere Gehäuseseite geführt und mit einem außerhalb des Gehäuses angeordneten Antrieb verbunden ist.

Der zu erfassende Massestrom eines jeweiligen Schüttguts wird durch das Einlaufrohr in die Mitte des Flügelrades geleitet, welches mit einer konstanten Drehzahl um seine Antriebsachse rotiert. Das Flügelrad besitzt sternförmig um seine Drehachse angeordnete Flügel, durch die das zufließende Schüttgut nach außen beschleunigt wird. Die der Bewegung der Masseteilchen zu Grunde liegende Coriolis-Beschleunigung, hat ein Moment auf das Flügelrad zur Folge, das proportional zu dem Massendurchfluss des über das Flügelrad fließenden Schüttguts ist. Die Corioliskraft wirkt dem vom Antrieb der Messvorrichtung bereitgestellten Drehmoment entgegen, das über die Antriebswelle auf die Flügel übertragen wird und kann in einer zwischen Antrieb und Antriebswelle vorgesehenen Drehmomentmesseinrichtung erfasst werden.

Aus der EP 0 590 187 B1 ist beispielsweise eine Ausführung eines Massendurchflussmessgeräts bekannt, bei dem die Antriebseinheit oberhalb eines rotierenden Flügelrads angeordnet ist. Die Antriebswelle des Flügelrades ist somit nach oben ausgerichtet und durch die Oberseite des Gehäuses der Vorrichtung geführt. Dadurch bedingt muss das jeweilige Schüttgut schräg durch ein Einlaufrohr von oben um die Antriebswelle herum zugeführt werden und kurz vor dem Eintritt in das Flügelrad in vertikale Richtung umgelenkt werden. Diese schräge Zufuhr des Schüttguts wirkt sich nachteilig auf die Messgenauigkeit der Vorrichtung aus. Außerdem können Fremdkörper an den notwendigen Umlenkungen und der Antriebswelle hängen bleiben und somit die Schüttgutzufuhr blockieren.

Eine alternative Ausführung eines Coriolismessgeräts, bei der ein zugehöriger Antrieb unterhalb des Flügelrads angeordnet ist, ist z.B. aus der DE 102 53 078 B3 bekannt. Vorteilhaft an derartigen Ausführungen von nach dem Coriolis-Prinzip arbeitenden Messvorrichtungen ist, dass die Antriebswelle nicht durch den einlaufenden Schüttgutstrom geführt werden muss, wodurch das Schüttgut vertikal von oben und direkt in die Mitte eines jeweiligen Flügelrades geleitet werden kann und nicht unmittelbar vor dem Zuführen umgelenkt werden muss. Diese vertikale Zufuhr des Schüttguts wirkt sich zwar vorteilhaft auf die Messgenauigkeit aus. Die Schüttgutabfuhr erfolgt dann schräg nach unten am mittig angeordneten Antrieb vorbei.

Gemäß EP 0 864 850 A1 ist ein Flügelrad in einer ersten Drehrichtung drehbar um eine vertikale Rotationsachse ausgebildet und weist einen zentralen Aufnahmebereich ohne Flügel auf. Um die gewünschte Verteilung des zugeführten Materials im Flügelrad zu erreichen, wird das Zuführrohr in einer zweiten Drehrichtung angetrieben, welche derjenigen des Flügelrades entgegen gesetzt ist.

Eine Ausführung mit einer unterhalb des Flügelrads angeordneten Antriebswelle und einer zentralen vertikalen Schüttgutzufuhr ist aus der DE 10 2004 060 045 B4 bekannt, wobei der Antrieb seitlich neben dem Gehäuse angeordnet ist. Die Kraftübertragung vom Antrieb auf die Antriebswelle bzw. das Flügelrad erfolgt über einen Zahnriemen oder ein Stirnradpaar das sich in einem gekapselten Gehäuse im Schüttgutraum des Coriolismessgeräts befindet. Die Schüttgutabfuhr erfolgt hierbei zentral unterhalb der Kraftübertragung.

Nachteilig bei diesen bekannten Ausführungen ist, dass der Antrieb sich zumindest teilweise im Schüttgutraum befindet und somit die Schüttgutabfuhr im Auslauftrichter der Messvorrichtung behindert. Darüber hinaus sind die betreffenden Komponenten des Antriebs, die im Schüttgutraum angeordnet sind, direkt der Temperaturbelastung durch das Schüttgut ausgesetzt.

Bei den bekannten Ausführungen von Coriolismessgeräten stellt sich insbesondere bei kleinen Volumenströmen bedingt durch die kleineren Einlaufquerschnitte und kleineren Gehäuseabmessungen verstärkt das Problem von möglichen Verstopfungen. Das Problem der Verstopfung ist aber auch bei der Förderung von schwierigen Schüttgütern bekannt.

Vor diesem Hintergrund hat sich die vorliegende Erfindung daher die Aufgabe gestellt, ein neues Konzept für ein Coriolismessgerät bereitzustellen, in dem die Vorteile einer zentralen, vertikalen Schüttgutzuführung auf das Flügelrad mit einer zentralen Schüttgutabfuhr und einer außenliegenden Antriebstechnik vereint sind und bei dem sich keine störenden Komponenten im Schüttgutstrom befinden.

Die Lösung dieser Aufgabe ist durch die Gegenstände gemäß unabhängigen Ansprüchen gegeben.

Bevorzugte und/oder vorteilhafte Ausführungen und Weiterbildungen sind Gegenstand der jeweiligen Unteransprüche.

Die Erfindung schlägt demgemäß ein Verfahren zum Messen eines Massenstromes fließfähiger Schüttgüter, nach dem Coriolis- Messprinzip, vor, welches sich dadurch auszeichnet, dass ein unterhalb einer vertikal angeordneten Hohlwelle angeordnetes Flügelrad über die Hohlwelle angetrieben wird und das Schüttgut vertikal von oben durch die Hohlwelle zugeführt wird.

Die Hohlwelle wird hierbei in zweckmäßiger Ausbildung oberhalb des Flügelrades und außerhalb eines für das Schuttgut reservierten Schüttgutraums mittels eines seitlich angeordneten Antriebs angetrieben, insbesondere durch einen Zahnriemen, einen Kettentrieb oder ein Stirnradpaar.

Eine erfindungsgemäße Vorrichtung zum Messen eines Massenstromes fließfähiger Schüttgüter, nach dem Coriolis-Messprinzip, erstreckt sich im Wesentlichen rotationssymmetrisch um eine Mittelachse und umfasst ein mit einem Antrieb und konstanter Drehzahl angetriebenes Flügelrad, mit dem ein in axialer Richtung aufgegebener Massenstrom radial umlenkbar ist. Das für die Umlenkung erforderliche Antriebsmoment ist mittels einer Drehmomentmesseinrichtung erfassbar. Das Flügelrad ist in einem stationären Gehäuse unter einer drehbar gelagerten Antriebswelle befestigt, die in vertikaler Ausrichtung durch eine obere Seite des Gehäuses geführt und mit dem Antrieb verbunden ist. Unterhalb des Flügelrads ist ein Auslauftrichter am Gehäuse vorgesehen, der mit dem Gehäuse einen Schüttgutraum umschließt und an einem unteren Ende eine Auslassöffnung beinhaltet.

Erfindungsgemäß ist die Antriebswelle als zweiseitig geöffnete Hohlwelle ausgeführt, die mit einer ersten Öffnung an einer Einlassöffnung ausgerichtet ist und mit einer zweiten Öffnung zum Flügelrad hin geöffnet ist.

Die Erfindung ermöglicht es somit, dass ein zu messender Massenstrom eines fließfähigen Schüttguts dem Flügelrad in vertikaler Richtung in das Zentrum seiner Drehachse zuführbar ist, ohne dass dieser um eine nach oben aus dem Gehäuse der Vorrichtung heraus geführten Antriebswelle herum geführt werden muss.

Bevorzugter Weise ist die als Hohlwelle ausgeführte Antriebswelle um einen Anschlussflansch drehbar gelagert, der statisch mit dem stationären Gehäuse verbunden ist. Der Anschlussflansch umfasst im Wesentlichen einen Hohlzylinder, der sich zentrisch um und entlang der Mittelachse von einer Einlassöffnung bis unmittelbar über dem Flügelrad erstreckt.

Die Hohlwelle ist bevorzugt mit einem Kugel- und/oder Rollenlager an dem Anschlussflansch gelagert. Der stationäre Anschlussflansch ist mittels wenigstens eines Wellendichtrings zur drehbaren Hohlwelle hin abgedichtet, wodurch ein Eindringen von Partikeln des Schüttguts in das Lager wirksam zu vermeiden ist.

Das stationäre Gehäuse der Vorrichtung ist mittels wellendichtring zur drehbaren Hohlwelle hin abgedichtet, wodurch der Schüttgutraum von der äußeren Umgebung abgedichtet ist.

Der Antrieb der Vorrichtung beinhaltet einen Antriebsmotor, der seitlich neben der drehbaren Hohlwelle angeordnet ist und statisch mit dem stationären Gehäuse verbunden ist. Die Kraftübertragung zwischen dem Antriebsmotor und der Hohlwelle erfolgt über eine Kraftübertragungseinrichtung, die bevorzugt als Zahnriemenantrieb, Kettenantrieb oder Stirnradpaar ausgeführt ist.

Die Einlassöffnung und die Auslassöffnung sind jeweils zentrisch zur Mittelachse der Vorrichtung ausgerichtet.

Besonders Vorteilhaft am Gegenstand der vorliegenden Erfindung ist, dass sowohl in der Zuführung des Schüttguts zum Flügelrad, als auch im Schüttgutraum unterhalb des Flügelrads keinerlei statische und/oder bewegliche Teile vorhanden sind, die den Schüttgutstrom innerhalb der Vorrichtung stören können. Des Weiteren ist der Antrieb mit dem Antriebsmotor, der Drehmomentmesseinrichtung, der Kraftübertragungseinrichtung und der Antriebswelle thermisch günstig außerhalb des Schüttgutraums an der Vorrichtung angeordnet.

Diese und weitere Merkmale sowie weitere damit einhergehende Vorteile der Erfindung ergeben sich aus der nachfolgenden näheren Beschreibung eines bevorzugten Ausführungsbeispiels unter Bezugnahme auf die beigefügte Zeichnung. In der Zeichnung zeigt:

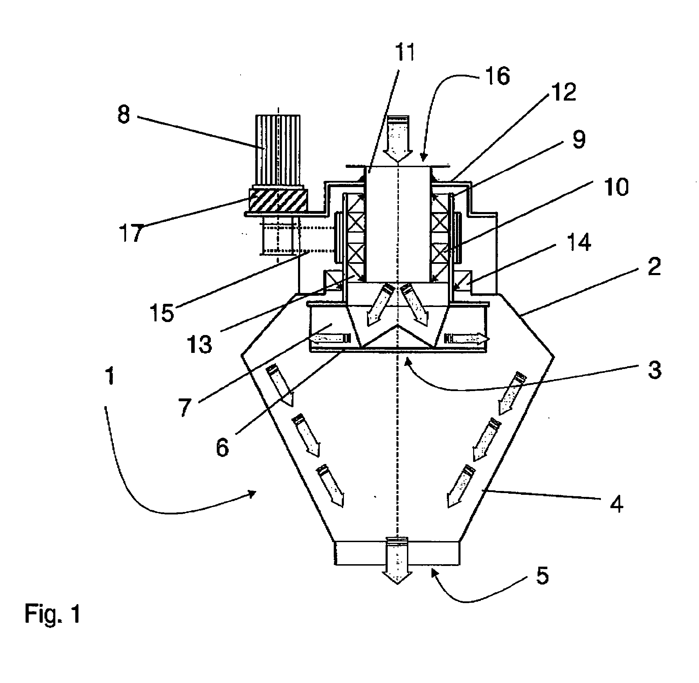

- Fig.1: Einen schematischen Querschnitt durch eine Vorrichtung zum Messen eines Massestromes von fließfähigen Schüttgütern, nach dem Coriolis-Messprinzip.

In der Figur ist eine erfindungsgemäße Vorrichtung zum Messen eines Massestromes von fließfähigen Schüttgütern, nach dem Coriolis-Messprinzip skizziert. Die eingezeichnete Strichpunktlinie kennzeichnet die Mittelachse der in einem Querschnitt dargestellten Messvorrichtung 1. Die Vorrichtung 1 ist in praktischer Weise im Wesentlichen rotationssymmetrisch zur Mittelachse aufgebaut.

Das skizzierte Coriolismessgerät 1 umfasst ein äußeres Gehäuse 2, in dem ein Flügelrad 3 drehbar gelagert ist. Unterhalb des Flügelrads 3 ist ein Auslauftrichter 4 angeordnet, der am Gehäuse 2 angefügt ist, wobei Gehäuse 2 und Auslauftrichter 4 zusammen ein äußeres Gehäuse, z.B. das gesamte Gehäuse, der Vorrichtung bilden und gegebenenfalls auch als einteiliges Bauelement ausgeführt sein können. Der Auslauftrichter 4 reduziert den Durchmesser des Gehäuses 2 auf die Größe einer Auslauföffnung 5. Die Auslauföffnung 5 ist zentral zur Mittelsenkrechten der Messvorrichtung angeordnet. An der Auslassöffnung 5 ist die Anschlussmöglichkeit einer in der Figur nicht dargestellten Fördereinrichtung vorgesehen, die beispielsweise in Form einer Rohrleitung ausgeführt sein kann.

Das Flügelrad 3 ist rotationssymmetrisch ausgebildet und besitzt einen horizontal angeordneten Flügelradteller 6, der um eine vertikale Mittelachse drehbar angetrieben ist. Die Rotationsachse des Flügelrads 3 verläuft durch die Mittelachse des Coriolismessgeräts 1. Auf der Oberseite des Tellers 6 befindet sich eine Anzahl von Flügeln 7, die sternförmig um die Rotationsachse des Flügelrades 3 angeordnet sind.

Der Antrieb des Flügelrads 3 wird über die Oberseite des durch das Gehäuse 2 und den Auslauftrichter 4 bebilderten Schüttgutraums bereitgestellt. Dieser Antrieb umfasst im Wesentlichen eine Drehmomentmesseinrichtung 17 und einen Antriebsmotor 8, mit dem eine mit dem Flügelrad 3 verbundene Antriebswelle angetrieben ist. Mir der im Antrieb vorgesehenen Drehmomentmesseinrichtung 17 wird die auf das Flügelrad 3 wirkende Corioliskraft erfasst.

Die Antriebswelle des Flügelrads 3 ist als Hohlwelle 9 ausgeführt, die über wenigstens ein Lager 10 drehbar, zweckmäßig um einem stationären Anschlussflansch 11, gelagert ist. Ein solches Lager 10 kann beispielsweise als Kugel- oder Rollenlager ausgeführt sein. Der Anschlussflansch 11 ist mit dem Gehäuse 2 statisch verbunden und umfasst im Wesentlichen einen Hohlzylinder. Dieser erstreckt sich entlang der Mittelachse von der Oberseite der Vorrichtung 1 zum Flügelrad 3 und ist z.B. durch ein weiteres Gehäuse oder durch eine Stützvorrichtung vom Gehäuse 2 getragen, nachfolgend auch als Antriebsgehäuse 12 bezeichnet. Die Antriebswelle 9 ist somit außerhalb des Schüttgutraums des Coriolismessgeräts angeordnet.

Der feststehende Anschlussflansch 11 ist mittels Wellendichtringen 13 zur drehbar an ihm gelagerten Hohlwelle 9 hin abgedichtet, um ein Eindringen von Schüttgut und anderen staubförmigen Partikeln in das Lager 10 zu vermeiden. Ein weiterer Wellendichtring 14 ist zwischen dem Flügelrad 3 und dem Gehäuse 2 vorgesehen, um den Schüttgutraum von der äußeren Umgebung der Vorrichtung abzudichten.

Der Antriebsmotor 8 befindet sich oberhalb des Flügelrades 3 und ist seitlich zur Hohlwelle 9 sowie außerhalb des Schüttgutraums angeordnet und ist mit einem Motorflansch mit dem Antriebsgehäuse verbunden. Die Rotorwelle des Antriebsmotors 8 ist somit zur Drehachse der Hohlwelle 9 parallel ausgerichtet und verläuft seitlich zu dieser beabstandet. Die Kraftübertragung zwischen dem Antriebsmotor 8 und der Hohlwelle 9 erfolgt über eine Kraftübertragungseinrichtung 15, die beispielsweise als Zahnriemenantrieb bzw. Kettenantrieb oder über ein Stirnradpaar ausgeführt sein kann.

Eine Drehmomentmesseinrichtung 17, mit der die Corioliskraft in einer Messung erfasst werden soll, ist in der Figur beispielhaft an dem Motorflansch angeordnet dargestellt.

Zur Massestrommessung wird ein fließfähiges Schüttgut über die Einlassöffnung 16 im Anschlussflansch 11 des dargestellten Coriolismessgeräts 1 zugeführt. Das Schüttgut fällt durch das zylindrische Rohr des Anschlussflansches 11, der von der rotierbar angetriebenen Hohlwelle 9 umgeben ist. Durch den unmittelbar über dem Flügelrad 3 endenden Anschlussflansch 11 wird das zentral, entlang der Mittelachse zugeführte Schüttgut in das Zentrum des Flügelrads 3 geleitet.

Die das Flügelrad 3 in senkrechter Richtung der Schwerkraft folgend zufließender Schüttgutteilchen treffen auf den horizontal ausgerichteten Fügelradteller.

Die Masseteilchen des Schüttguts erfahren durch die Flügel des mit konstanter Drehzahl angetriebenen Flügelrads 3 eine Winkelbeschleunigung. Die zur Beschleunigung der Masseteilchen erforderliche Kraft, die sog. Corioliskraft wirkt dem Drehmoment des Antriebs entgegen und wird in der Drehmomentmesseinrichtung 17 erfasst. Das gemessene dem Antrieb entgegenwirkende Drehmoment ist proportional zu dem aktuell über das Flügelrad fließenden Massestrom.

Die im dem Flügelrad 3 in dessen Drehrichtung beschleunigenden Schüttgutteilchen bewegen sich der Zentrifugalkraft folgend in radialer Richtung und verlassen dieses am äußeren Rand, zweckmäßig gemäß vorbeschriebener Vorrichtung in tangentialer Richtung. Das vom Flügelrad abgeworfene Schüttgut wird von dem Gehäuse 2 aufgefangen und geleitet durch die Schwerkraft an der Innenwand des Auslauftrichters 4 hinunter zur zentralen Auslassöffnung 5 des Messgeräts.

Der Schüttgutfluss ist in der Figur durch die Pfeile angedeutet. Aus der Zeichnung ist ersichtlich, dass bei dieser Vorrichtung sowohl Einlauf und Auslauf auf der Mittelachse der Messvorichtung angeordnet sind. Das Coriolismessgerät verfügt über eine zentrale, vertikale Schüttgutaufgabe sowie eine zentrale Schüttgutabfuhr. In dem Schüttgutraum sind, insbesondere durch den außenliegenden Antrieb, keine Bauteile vorhanden, die Schüttgutfluss behindern und zur Verstopfung der Vorrichtung führen können.

Die vorbeschriebene Vorrichtung nach der Erfindung eignet sich somit in besonders bevorzugter Weise zur Durchführung eines Verfahrens zum Messen eines Massenstromes fließfähiger Schüttgüter, nach dem Coriolis- Messprinzip, bei welchem ein unterhalb einer vertikal angeordneten Hohlwelle angeordnetes Flügelrad über die Hohlwelle angetrieben wird und das Schüttgut vertikal von oben durch die Hohlwelle zugeführt wird, wobei die Hohlwelle in zweckmäßiger Ausbildung oberhalb des Flügelrades und außerhalb eines für das Schuttgut reservierten Schüttgutraums mittels eines seitlich angeordneten Antriebs angetrieben wird, insbesondere durch einen Zahnriemen, einen Kettentrieb oder ein Stirnradpaar.

## Patentansprüche

1. Vorrichtung zum Messen eines Massenstromes fließfähiger Schüttgüter, nach dem Coriolis- Messprinzip,
mit
- einem äußeren, stationären Gehäuse (2);
- - in dem ein Flügelrad (3) drehbar gelagert ist;
- und einem Antrieb
- - der eine Drehmomentmesseinrichtung (17) und zum Antrieb des Flügelrades (3) mit konstanter Drehzahl einen Antriebsmotor (8) umfasst,
- - - mit dem eine mit dem Flügelrad (3) verbundene Antriebswelle angetrieben ist;
- - - - die in vertikaler Ausrichtung durch eine obere Seite des Gehäuses (2) geführt ist, derart, dass die Rotationsachse des Flügelrades (3) durch eine Mittelachse der Vorrichtung verläuft,
- wobei das Flügelrad (3) in dem Gehäuse (2) unterhalb der drehbar gelagerten Antriebswelle (9) befestigt ist,
- und wobei unterhalb des Flügelrads (3) ein Auslauftrichter (4) an dem Gehäuse (2) vorgesehen ist,
- - der mit dem Gehäuse einen Schüttgutraum umschließt und
- - an einem unteren Ende eine Auslassöffnung (5) beinhaltet,
- wobei die Vorrichtung sich im Wesentlichen rotationssymetrisch um die Mittelachse erstreckt und
- wobei mit dem Flügelrad (3) ein in axialer Richtung aufgegebener Massenstrom radial umlenkbar ist und das für die Umlenkung erforderliche Antriebsmoment in der Drehmomentmesseinrichtung (17) erfassbar ist,
**dadurch gekennzeichnet, dass**
die Antriebswelle (9) als zweiseitig geöffnete Hohlwelle ausgeführt ist, die mit einer ersten Öffnung an einer Einlassöffnung (16) ausgerichtet ist und mit einer zweiten Öffnung zum Flügelrad (3) hin geöffnet ist, durch die der zu messende Massenstrom dem Flügelrad (3) in vertikaler Richtung zuführbar ist.

2. Vorrichtung nach Anspruch 1, **dadurch gekennzeichnet, dass** die Hohlwelle (9) um einen Anschlussflansch (11) drehbar gelagert ist, wobei der Anschlussflansch (11) statisch mit dem Gehäuse (2) verbunden ist.

3. Vorrichtung nach Anspruch 2, **dadurch gekennzeichnet, dass** der Anschlussflansch (11) im Wesentlichen einen Hohlzylinder umfasst, der sich zentrisch um und entlang die Mittelachse von einer Einlassöffnung (16) bis unmittelbar über dem Flügelrad (3) erstreckt.

4. Vorrichtung nach einem der Ansprüche 2 oder 3, **dadurch gekennzeichnet, dass** die Hohlwelle mit (9) einem Kugel und/oder Rollenlager (10) an dem Anschlussflansch (11) gelagert ist.

5. Vorrichtung nach einem der Ansprüche 2 bis 4, **dadurch gekennzeichnet, dass** der stationäre Anschlussflansch (11) mittels wenigstens einem Wellendichtring (10) zur drehbaren Hohlwelle (9) hin abgedichtet ist.

6. Vorrichtung nach einem der vorstehenden Ansprüche 1 bis 5, **dadurch gekennzeichnet, dass** das stationäre Gehäuse (2) mittels Wellendichtring (14) zur drehbaren Hohlwelle (9) hin abgedichtet ist.

7. Vorrichtung nach einem der vorstehenden Ansprüche 1 bis 6, **dadurch gekennzeichnet, dass** der Antrieb einen Antriebsmotor (8) beinhaltet, der seitlich neben der drehbaren Hohlwelle (9) statisch mit dem stationären Gehäuse (2) verbunden ist, wobei die Kraftübertragung zwischen dem Antriebsmotor (8) und der Hohlwelle (9) über eine Kraftübertragungseinrichtung (15) erfolgt.

8. Vorrichtung nach Anspruch 7, **dadurch gekennzeichnet, dass** die Kraftübertragungseinrichtung (15), ein Zahnriemenantrieb und/oder ein Kettenantrieb und/oder ein Stirnradpaar ist.

9. Vorrichtung nach einem der vorstehenden Ansprüche 1 bis 8, **dadurch gekennzeichnet dass**, Einlassöffnung (16) und Auslassöffnung (5) zentrisch zur Mittelachse ausgerichtet sind.

10. Verfahren zum Messen eines Massenstromes fließfähiger Schüttgüter, nach dem Coriolis- Messprinzip,
- bei dem ein Massestrom in eine Vorrichtung, die sich im wesentlichen rotationssymmetrisch um eine Mittelachse erstreckt und die ein mit einem Antrieb und konstanter Drehzahl angetriebenes Flügelrad (3) umfasst, in axialer Richtung aufgegeben wird,
- bei dem der Massestrom vom dem Flügelrad (3) radial umgelenkt wird und
- bei dem das für die Umlenkung des Massestroms erforderliche Antriebsmoment mittels einer Drehmomentmesseinrichtung (17) erfassbar wird,
- **dadurch gekennzeichnet, dass** ein unterhalb einer vertikal angeordneten Hohlwelle angeordnetes Flügelrad über die Hohlwelle angetrieben wird und das Schüttgut vertikal von oben durch die Hohlwelle zugeführt wird.

11. Verfahren nach Anspruch 10, ferner **dadurch gekennzeichnet, dass** die Hohlwelle oberhalb des Flügelrades und außerhalb eines für das Schüttgut reservierten Schüttgutraums mittels eines seitlich angeordneten Antriebs angetrieben wird, insbesondere durch einen Zahnriemen, einen Kettentrieb oder ein Stirnradpaar.

## Claims

1. Apparatus for measuring a mass flow of flowable bulk materials, according to the Coriolis measuring principle, having
- an outer, stationary housing (2);
- - in which a vane wheel (3) is rotatably supported;
- and a drive
- - which comprises a torque measuring device (17) and a drive motor (8) for powering the vane wheel (3) with constant speed of rotation,
- - - with which a drive shaft connected to the vane wheel (3) is powered;
- - - - which is routed in a vertical orientation through the top side of the housing (2), such, that the rotational axis of the vane wheel (3) extends along a central axis of the apparatus,
- wherein the vane wheel (3) is fastened in the housing (2) below the rotatably supported drive shaft (9),
- and wherein below the vane wheel (3), an outlet funnel (4) is provided on the housing (2),
- - which with the housing encloses a bulk material chamber and
- - contains a discharge opening (5) at a lower end,
- wherein the apparatus substantially extends rotationally symmetrical around the central axis and
- wherein with the vane wheel (3), a mass flow fed in the axial direction can be radially deflected and the drive torque required for deflection can be detected in the torque measuring device (17),
**characterized in that**
the drive shaft (9) is configured as a two-sided open hollow shaft, which is aligned with a first opening at a feed opening (16) and is open with a second opening towards the vane wheel (3) through which the mass flow to be measured can be fed in the vertical direction to the vane wheel (3).

2. Apparatus according to claim 1, **characterized in that** the hollow shaft (9) is rotatably supported around a connecting flange (11), wherein the connecting flange (11) is statically connected with the housing (2).

3. Apparatus according to claim 2, **characterized in that** the connecting flange (11) substantially comprises a hollow cylinder that extends centrically around and along the central axis from one feed opening (16) to immediately above the vane wheel (3).

4. Apparatus according to one of claims 2 or 3, **characterized in that** the hollow shaft (9) is supported by a ball and/or a roller bearing (10) on the connecting flange (11).

5. Apparatus according to one of claims 2 to 4, **characterized in that** the stationary connecting flange (11) is sealed toward the rotatable hollow shaft (9) by at least one shaft seal ring (10).

6. Apparatus according to one of the preceding claims 1 to 5, **characterized in that** the stationary housing (2) is sealed toward the rotatable hollow shaft (9) by a shaft seal ring (14).

7. Apparatus according to one of the preceding claims 1 to 6, **characterized in that** the drive includes a drive motor (8) that is statically connected laterally and adjacent to the rotatable hollow shaft (9) with the stationary housing (2), wherein the power transmission between the drive motor (8) and the hollow shaft (9) occurs via a power transmission means (15).

8. Apparatus according to claim 7, **characterized in that** the power transmission means (15) is a toothed belt drive and/or a chain drive and/or a spur gear pair.

9. Apparatus according to one of the preceding claims 1 to 8, **characterized in that** feed opening (16) and discharge opening (5) are aligned centrically relative to the central axis.

10. Method for measuring a mass flow of flowable bulk material according to the Coriolis principle of measurement,
- in which a mass flow is fed in the axial direction into an apparatus that substantially extends rotationally symmetrical around a central axis and that includes a vane wheel (3) powered by a drive and a constant speed of rotation,
- in which the mass flow is radially deflected by the vane wheel (3) and
- in which the drive torque required for the deflection of the mass flow is detectable by means of a torque measuring device (17),
- **characterized in that** a vane wheel disposed below a vertically-disposed hollow shaft is powered via the hollow shaft and that the bulk material is fed vertically from above through the hollow shaft.

11. Method according to claim 10, further **characterized in that** the hollow shaft is powered above the vane wheel and outside of a bulk material chamber reserved for the bulk material by means of a laterally disposed drive, in particular by means of a toothed belt, a chain drive or a spur pair gear.

## Revendications

1. Dispositif de mesure d'un débit massique de produits en vrac fluides, selon le principe de mesure de Coriolis, avec
- un boîtier stationnaire externe (2) ;
-- dans lequel est logée de manière rotative une roue à aubes (3) ;
- et un entraînement
-- qui comprend un dispositif de mesure de couple (17) et, pour l'entraînement de la roue à aubes (3) avec une vitesse de rotation constante, un moteur d'entraînement (8)
--- avec lequel un arbre d'entraînement relié avec la roue à aubes (3) est entraîné ;
---- qui est guidé dans une orientation verticale par un côté supérieur du boîtier (2), de façon à ce que l'axe de rotation de la roue à aubes (3) s'étende à travers un axe central du dispositif,
- la roue à aubes (3) étant fixée dans le boîtier (2) en dessous de l'arbre d'entraînement (9) logé de manière rotative,
- et, en dessous de la roue à aubes (3), une trémie de sortie (4) étant prévue au niveau du boîtier (2),
-- qui entoure, avec le boîtier, un espace de produit en vrac, et
-- qui comprend, au niveau d'une extrémité inférieure, une ouverture de sortie (5),
- le dispositif s'étendant globalement de manière symétrique en rotation autour de l'axe central et
- un débit massique pouvant être dévié radialement avec la roue à aubes (3) dans la direction axiale et le couple d'entraînement nécessaire pour la déviation pouvant être mesuré dans le dispositif de mesure de couple (17), **caractérisé en ce que**
l'arbre d'entraînement (9) est réalisé comme un arbre creux ouvert des deux côtés, qui est orienté, avec une première ouverture, vers une ouverture d'entrée (16) et, ouvert, avec une deuxième ouverture, en direction de la roue à aubes (3), par l'intermédiaire de laquelle le débit massique à mesurer peut être introduit dans la roue à aubes (3) dans la direction verticale.

2. Dispositif selon la revendication 1, **caractérisé en ce que** l'arbre creux (9) est logé de manière rotative autour d'une bride de raccordement (11), la bride de raccordement (11) étant reliée de manière statique avec le boîtier (2).

3. Dispositif selon la revendication 2, **caractérisé en ce que** la bride de raccordement (11) comprend globalement un cylindre creux qui s'étend de manière centrée autour et le long de l'axe central d'une ouverture d'entrée (16) jusqu'à immédiatement au-dessus de la roue à aubes (3).

4. Dispositif selon l'une des revendications 2 ou 3, **caractérisé en ce que** l'arbre creux (9) est logé au niveau de la bride de raccordement (11) avec un palier à billes et/ou à rouleaux (10).

5. Dispositif selon l'une des revendications 2 à 4, **caractérisé en ce que** la bride de raccordement stationnaire (11) est étanchéifiée, à l'aide d'au moins une bague d'étanchéité d'arbre (10), par rapport à l'arbre creux rotatif (9).

6. Dispositif selon l'une des revendications précédentes 1 à 5, **caractérisé en ce que** le boîtier stationnaire (2) est étanchéifié, à l'aide d'une bague d'étanchéité d'arbre (14), par rapport à l'arbre creux rotatif (9).

7. Dispositif selon l'une des revendications précédentes 1 à 6, **caractérisé en ce que** l'entraînement comprend un moteur d'entraînement (8) qui est relié de manière statique latéralement à proximité de l'arbre creux rotatif (9) avec le boîtier stationnaire (2), la transmission des forces entre le moteur d'entraînement (8) et l'arbre creux (9) ayant lieu par l'intermédiaire d'un dispositif de transmission de forces (15).

8. Dispositif selon la revendication 7, **caractérisé en ce que** le dispositif de transmission de forces (15) est un entraînement à courroie dentée et/ou un entraînement à chaîne et/ou une paire de pignons droits.

9. Dispositif selon l'une des revendications précédentes 1 à 8, **caractérisé en ce que** l'ouverture d'entrée (16) et l'ouverture de sortie (5) sont orientées de manière centrale par rapport à l'axe central.

10. Procédé de mesure d'un débit massique de produits en vrac fluides, selon le principe de mesure de Coriolis,
- dans lequel un débit massique est distribué dans la direction axiale dans un dispositif qui s'étend de manière globalement avec une symétrie de rotation autour d'un axe central et qui comprend une roue à aubes (3) entraînée avec un entraînement et une vitesse de rotation constante,
- dans lequel le débit massique est dévié radialement par la roue à aubes (3) et
- dans lequel le couple d'entraînement nécessaire pour la déviation du débit massique peut être mesuré à l'aide d'un dispositif de mesure de couple (17),
- **caractérisé en ce qu'**une roue à aubes disposée en dessous d'un arbre creux disposée verticalement est entraînée par l'arbre creux et le produit en vrac est introduit verticalement par le haut par l'arbre creux.

11. Procédé selon la revendication 10, en outre **caractérisé en ce que** l'arbre creux est entraîné au-dessus de la roue à aubes et à l'extérieur d'un espace de produit en vrac réservé au produit en vrac à l'aide d'un entraînement disposé latéralement, plus particulièrement par une courroie dentée, un entraînement à chaîne ou une paire de pignons droits.
